# EUROPEAN PATENT APPLICATION

(11) **EP 4 474 848 A1**
(43) Date of publication of application: **11.12.2024**
(21) Application number: 23178008.1
(22) Date of filing: 07.06.2023
(51) Int. Cl.: G01S 1/70, G01S 5/00, G01S 5/02, G06K 19/07, G06K 19/077, G08B 21/24, G08B 25/10, H04W 4/029, H04B 7/06, H04B 7/08, G08B 21/02

(54) **DEVICE FOR TRACKING OBJECT**

(71) Applicant: Nagravision Sàrl, 1033 Cheseaux-sur-Lausanne (CH)
(72) Inventor: Depraz, Florian, 1033 Cheseaux-sur-Lausanne (CH)
(74) Representative: Novagraaf International SA

(57) **Abstract**

The device (100) for tracking an object (200), comprising means for attaching to said object (200), a wireless communication circuit (102), at least two antenna modules (104) having respective positions different from one another, and at least one processor (108) configured to:
- select one of the at least two antenna modules (104) based on information indicative of the best-oriented antenna module among the at least two antenna modules, the best-oriented antenna module being arranged to transmit to, or receive from, an external device (300) wireless signals with higher received signal strength value compared to the other antenna module(s) from the at least two antenna modules (104);
- transmit or receive one or more signals for tracking said object (200) using the wireless communication circuit (102) and the selected best-oriented antenna module (104).

## Description

### TECHNICAL FIELD

The present disclosure relates to tracking devices used to track objects such as keys, luggage, purses, among others.

### BACKGROUND

It is known to use a tracking device attached to an object, such as a key, luggage, purse, bag, electronic device, vehicle, cat, dog, etc., to help a person to find said object. The tracking device is small, usually about a few centimeters wide and a few millimeters thick, and can be attached to the object for example with a strap or keychain. It can include a processor, a short-range wireless communication circuit, using for example BLE (Bluetooth Low Energy), an antenna, a non-volatile memory, and an internal power source.

The tracking device can interact with one or more external devices, such as a gateway arranged in an area (e.g., a building site), or a user equipment such as a smartphone. If the tracking device is within the Bluetooth range of an external device, it can receive a command from this external device to play a ringtone, using an internal loudspeaker, to audibly alert a user of its position. The tracking device may also be configured to transmit advertising packets including a device identifier to be located by external devices, for example based on a triangulation algorithm.

Even if the tracking device is within the radio range of the external device, the external device and/or the tracking device may not have enough signal to get a good wireless connection between the two devices. This may result from an inappropriate position of the tracking device, for example if its antenna is facing the floor. In such a case, the received signal strength, representing the power present in the received radio signal, for a signal from the tracking device or from the external device, is too low or even zero, which result in a bad wireless connection or no wireless connection between the two devices.

Therefore, it is desired to facilitate the wireless communication between the tracking device and an external device, if the tracking device is present in the environment of the external device, and more precisely within a wireless or radio coverage range.

### SUMMARY

The present disclosure concerns a device for tracking an object, said device being configured to be attached to said object and including a wireless communication circuit, at least two antenna modules having respective positions different from one another, and at least one processor configured to:
- select one of the at least two antenna modules based on information indicative of the best-oriented antenna module among the at least two antenna modules, the best-oriented antenna module being arranged to transmit to, or receive from, an external device wireless signals with higher received signal strength measurement value compared to the other antenna module(s) from the at least two antenna modules;
- transmit or receive one or more signals for tracking said object using the wireless communication circuit and the selected best-oriented antenna module.

According to the present disclosure, the tracking device, that can be attached to the object, includes a plurality of antenna modules having different positions in the tracking device, and is configured to select one of the plurality of antenna modules based on an information indicative of the antenna module that is best-oriented for communication (i.e., reception and/or transmission of radio or wireless signals) with an external device. The external device may be located anywhere in an environment of the tracking device, within a wireless or radio coverage range of the tracking device. The best-oriented antenna module is likely to transmit to the external device, or receive from the external device, a wireless signal having a higher radio signal strength when said wireless signal is received either by the external device, or by the tracking device, compared to wireless signals transmitted or received by the other antenna modules.

In an embodiment, the tracking device further comprises an orientation sensor, and the at least one processor is configured to determine said information indicative of the best-oriented antenna module using sensor data from the orientation sensor. The at least one processor may be configured to determine an orientation of the tracking device based on the sensor data and determine said best-oriented antenna module based on the determined orientation of the tracking device.

A correspondence between the orientation of the tracking device and the best-oriented antenna module may be predetermined. The tracking device may be configured to select one of the antenna module based on the sensor data from the orientation sensor and the predetermined correspondence, or mapping, between the orientation of the tracking device and the best-oriented antenna module.

In an embodiment, this correspondence between the orientation of the tracking device and the best-oriented antenna module may be stored in a mapping table. The tracking device can use the sensor data and the mapping table to select the antenna module.

In another embodiment, a trained machine learning model, for example a neural network, can be used to output the best-oriented antenna based on the orientation of the tracking device, or directly based on the sensor data, as input data. The machine learning model may be trained based training data comprising input data including multiple orientations of the tracking device, or multiple sensor data corresponding to multiple orientations of the tracking device, and output data including the corresponding best-oriented antenna for each orientation of the tracking device.

The tracking device is thus arranged to self-determine the best-oriented antenna that is likely to transmit to an external device the wireless signal with higher received radio signal strength compared to the other antenna module(s), or to receive from this external device the wireless signal with higher received radio signal strength compared to the other antenna module(s). The external device may be located anywhere in a surrounding environment of the tracking device. For example, if it is determined that the tracking device has an antenna module downward facing and another antenna module upward facing, the antenna module upward facing may be selected by the tracking device, since it is likely to have a more appropriate radio exposition for communication with an external device, while the downward facing antenna module is likely to be oriented towards the ground.

In another embodiment, the at least one processor is configured to:
transmit to an external device at least two signals using the wireless communication circuit and, respectively, the at least two antenna modules, each signal including antenna identification information for the antenna module used for transmitting said signal,
receive from the external device said information indicative of the best-oriented antenna module including the antenna identification information for the antenna module with higher received signal strength value compared to the other antenna module(s) from the at least two antenna modules

In this embodiment, the tracking device cooperates with an external device to select its best-oriented antenna. The tracking device transmits different wireless signals respectively using its different antenna modules, the external device measures the radio signal strength of the different received wireless signals, determines the antenna module of the tracking device with the higher radio signal strength compared to the other antenna module(s), and notifies the determined antenna module to the tracking device.

In an embodiment, the wireless communication circuit and the at least one processor being mounted on a circuit board, the at least two antenna modules are arranged at different positions on at least one face of the circuit board.

At least one antenna module may be positioned on a first face of the circuit board and at least one other antenna module may be positioned on a second face of the circuit board, opposite to the first face.

The at least two antenna modules may be respectively positioned along different sides of the circuit board, and/or in different corners of the circuit board.

In an embodiment, the tracking device further comprises a switching circuit, interposed between the wireless communication circuit and the at least two antenna modules, configured to switch between the at least two antenna modules under control of the at least one processor.

In a variant, the tracking device further comprises one or more additional antenna modules arranged on a strap for attaching the device and the object, wherein said one or more additional antenna modules are connected to the wireless communication circuit through a cable.

The tracking device may further comprise a loudspeaker and wherein the received signal for tracking said object includes a command for emitting a sound signal, and the at least one processor is configured to emit the sound signal using the loudspeaker upon reception of said command.

The present disclosure also concerns a device configured to wirelessly communicate with a tracking device as above defined, comprising a wireless communication circuit and at least one processor configured to:
- receive from the tracking device one or more signals from the at least two antenna modules of the tracking device, using said wireless communication circuit, each received signal including antenna identification information for the antenna module of the tracking device used for transmitting said signal;
- determine received signal strength values for the one or more received signals,
- determine the antenna module of the tracking device with higher received signal strength value compared to the other antenna module(s) from the at least two antenna modules of the tracking device;
- transmit to the tracking device an information indicative of the best-oriented antenna module including the antenna identification information for said determined antenna module, using said wireless communication circuit.

In an embodiment, the at least one processor is configured to transmit a command for emitting a sound signal to the tracking device, using the wireless communication circuit.

In an embodiment, the at least one processor is configured to receive from the tracking device an advertising signal including a device identification information, using the wireless communication circuit, and to determine location information of the tracking device using the received advertising signal.

The present disclosure further concerns a method for tracking an object attached to a tracking device, said tracking device comprising a wireless communication circuit, at least two antenna modules having respective positions different from one another, and at least one processor, the method comprising the steps, performed by said at least one processor, of:
- selecting one of the at least two antenna modules based on information indicative of the best-oriented antenna module among the at least two antenna modules, the best-oriented antenna module being arranged to transmit to, or receive from, an external device wireless signals with higher received signal strength value compared to the other antenna module(s) from the at least two antenna modules;
- transmitting or receiving one or more signals for tracking said object using the wireless communication circuit and the selected best-oriented antenna module.

In an embodiment, the method may further comprise a step of measuring sensor data with an orientation sensor of the tracking device, and a step, performed by the at least one processor, of determining said information indicative of the best-oriented antenna module using the sensor data from the orientation sensor.

In another embodiment, the method further comprises the steps, performed by the at least one processor, of:
transmitting to an external device at least two signals using the wireless communication circuit and, respectively, the at least two antenna modules, each signal including antenna identification information for the antenna module used for transmitting said signal;
receiving from the external device said information indicative of the best-oriented antenna module including the antenna identification information for the antenna module with higher received signal strength value compared to the other antenna module(s) from the at least two antenna modules.

The present disclosure also concerns a computer program comprising instructions which, when the program is executed by a computer, cause the computer to carry out the method above defined.

### BRIEF DESCRIPTION OF THE DRAWINGS

Other features, purposes and advantages of the disclosure will become more explicit by means of reading the detailed statement of the non-restrictive embodiments made with reference to the accompanying drawings.
Figure 1 shows a simplified block diagram of a system including a tracking device, an object attached to the tracking device, and an external device, according to an embodiment.
Figure 2 shows a simplified flowchart of a method for tracking the object, according to an embodiment.
Figure 3 shows a flowchart of a process for selecting an antenna of the tracking device, according to a first embodiment.
Figure 4A shows a flowchart of a process for tracking the object using the tracking device, according to an embodiment.
Figure 4B shows a flowchart of a process for tracking the object using the tracking device, according to another embodiment.
Figure 5 shows a flowchart of a process for selecting an antenna of the tracking device, according to a second embodiment.
Figure 6 shows a strap for attaching the tracking device, according to an embodiment.

### DETAILED DESCRIPTION

The following detailed description describes various features and functions of the disclosed systems and methods with reference to the accompanying figures. In the figures, similar symbols identify similar components, unless context dictates otherwise. The illustrative system, device and method embodiments described herein are not meant to be limiting. It may be readily understood by those skilled in the art that certain aspects of the disclosed systems, devices and methods can be arranged and combined in a wide variety of different configurations, all of which are contemplated herein.

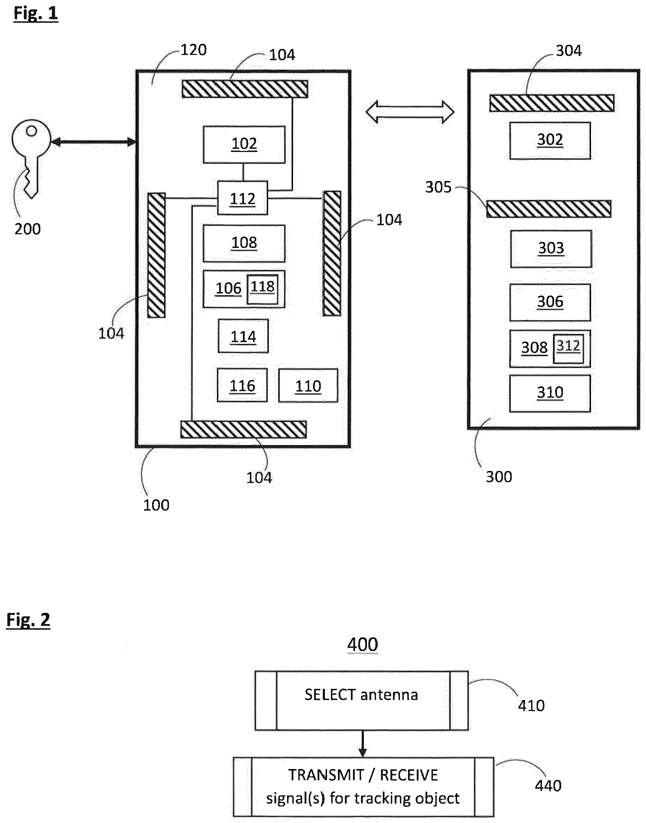

Figure 1 shows a simplified block diagram of a system including a tracking device 100, an object 200 attached to the tracking device 100, and an external device 300, according to an embodiment.

The tracking device 100 can be used to track, or find, the object 200, which the tracking device 100 is attached to. The tracking device 100 can be used to allow a user to find the object 200. For example, to help a user to find the object 200, the tracking device 100 may emit an alert sound, like a ringtone, upon reception of a wireless signal, and/or transmit a wireless signal. The object 200 can be for example a key, a group of keys, a bag, an electronic device, a purse, a vehicle, a cat, a dog, among others.

The tracking device 100 may have at least one of the two following tracking or finding functions:
- receiving a wireless command signal from an external device (e.g., the external device 300 shown in figure 1) and emitting an alert sound (e.g., a ringtone) upon reception of said command to audibly signal the object position to a user;
- emitting a wireless signal, that can be termed as an advertising signal, for example to allow one or more external devices to locate it.

### First embodiment

In a first embodiment, the tracking device 100 includes a wireless or radio communication circuit or module 102, a plurality of antenna modules, here referred as antennas, 104, a non-volatile memory 106, a processor 108 and a power source 110.

The wireless communication circuit 102 may include a chipset. The chipset or wireless communication circuit 102 may be configured to couple to or communicate with an external device (e.g., the external device 300 in figure 1) using one of the antennas 104. The wireless communication circuit 102 is arranged to communicate according to one or more types of wireless communication (e.g., protocols). In an embodiment, the wireless communication circuit 102 is arranged to communicate according to one or more types of short-range communication such as Bluetooth or Bluetooth Low Energy (BLE). Additionally or alternatively, the wireless communication circuit 102 may be configured to use Wi-Fi protocols and/or UWB (Ultra-Wide Band) technology to communicate.

Each antenna module 104 can include one or more antenna elements for wireless transmission and/or reception of signals. For example, the antenna module 104 can include one antenna element that can be used for both transmitting and receiving wireless signals, but not simultaneously (i.e., in half-duplex). In another example, the antenna module 104 may include one antenna element for transmitting and another antenna element for receiving.

In the first embodiment, the tracking device 100 may further include an orientation sensor 114. For example, the orientation sensor 114 may include an accelerometer. Alternatively, or additionally, the orientation sensor 114 may include a gyroscope and/or a magnetometer.

Optionally, the tracking device 100 may include a loudspeaker 116, or acoustic transducer.

The plurality of antennas 104 are connected to the wireless communication circuit 102. In an embodiment, the antennas 104 are connected to the wireless communication circuit 102 through a switching circuit or switching module 112. The switching circuit 112, interposed between the wireless communication circuit 102 and the antennas 104, is configured to switch between the antennas 104 to selectively connect one antenna module 104 to the wireless communication circuit 102.

The device 100 may comprise a circuit board 120, or printed circuit board (PCB), on which at least part of its components 102 to 116 are mounted.

The antenna modules 104 have respective positions different from one another. They may be mounted or printed on at least one of the faces of the circuit board120.

Let's consider that the device 100 has a number N of antenna modules 104, with N>1. In the illustrative example of figure 1, N = 4. The N antenna(s) may be arranged, or positioned, on at least one face of the circuit board 120. In an example, the N antennas may be respectively arranged along different sides of said circuit board 120. For example, the circuit board 120 may have a rectangular shape and four antennas 104 may be arranged on a face of the circuit board 120, respectively along the four sides the circuit board 120, as shown in figure 1. Alternatively, the antennas 104 may be arranged on a face of the circuit board 120 in corners of the circuit board 120. In another embodiment, some antennas may be arranged along one or more sides of the circuit board 120, and other antennas may be arranged in one or more corners of the circuit board 120.

A number N1 of antenna(s) 104, with N1≥1, may be arranged on a first face of the circuit board 120 and a number N2 of antennas, with N2≥1, may be arranged on a second face of the circuit board 120, opposite to the first face (with N1+N2=N). In an embodiment, one antenna 104 may be arranged on the first face of the circuit board 120, and one other antenna 104 may be arranged on the second face of the circuit board 120. In another example, two or more antennas 104 may be arranged on each face of the circuit board 120, for example along sides and/or in corners of the circuit board 120.

The memory 106 may contain instructions 118 (e.g., program logic) executable by the processor 108 to execute various device functions. The memory 106 may contain additional instructions as well, including instructions to transmit data or signal to, receive data or signal from, interact with, and/or control one or more of the wireless communication circuit 102, the device components including the antenna modules 104, the switching circuit 112, the sensor 114, the loudspeaker 116, the power source 110.

The power source 110 is configured to provide power to some or all of the components of the tracking device 100. To this end, the power source 110 may include, for example, a rechargeable or non-rechargeable battery.

The processor 108 is configured to control the operations of the tracking device 100. It is connected to the components 102 to 116 of the tracking device 100. In another embodiment, the tracking device 100 may have a plurality of processors.

In the present disclosure, the processor 108 is configured to select one of the plurality of antennas 104 based on an information indicative of the best-oriented antenna for transmitting to, or receiving from, an external device wireless signals using the wireless communication circuit 102 and the selected best-oriented antenna 104. The best-oriented antenna 104 corresponds to the antenna 104 arranged to transmit to, or receive from, an external device wireless signals with higher received signal strength measurement value compared to the other antenna(s) from the plurality of antennas 104. The selected best-oriented antenna 104 is then used to transmit and/or receive one or more signals for tracking the object 200 using the wireless communication circuit 102.

In the first embodiment, the processor 108 is configured to determine (i.e., self-determine) said information indicative of the best-oriented antenna 104 based on data from the orientation sensor 114.

Figure 1 shows a simplified block diagram of the external device 300 according to an embodiment. It may include a first wireless communication circuit 302, a first antenna module or antenna 304, at least one processor 306, at least one non-volatile memory 308, and a power source 310. In some embodiments, the external device 300 may comprise a second wireless communication circuit 303 and a second antenna module or antenna 305. The antenna modules 304, 305 are connected to the wireless communication circuits 302, 303, respectively. Alternatively, the external device 300 may include one antenna module connected to the first wireless communication circuit 302 and second wireless communication circuit 303, if the two wireless communication circuits share a same radio range.

The first wireless communication circuit 302 may be configured to couple to or communicate with the tracking device 100 using the antenna module 304. The wireless communication circuit 302 may be arranged to communicate according to one or more types of wireless communication (e.g., protocols), including the same type(s) of wireless communication as the one(s) used by the tracking device 100. In an embodiment, the wireless communication circuit 302 is arranged to communicate according to one or more types of short-range communication such as Bluetooth or Bluetooth Low Energy (BLE). Additionally or alternatively, the wireless communication circuit 302 may be configured to use Wi-Fi protocols and/or UWB (Ultra-Wide Band) technology to communicate.

The second wireless communication circuit 303 may be configured to communicate according to another type of wireless communication, different from the wireless communication of the first wireless communication circuit 302. In an embodiment, the second wireless communication circuit 303 is configured to communicate through a mobile network and/or a Wi-Fi network for example.

The memory 308 may contain instructions 312 (e.g., program logic) executable by the processor 306 to execute various device functions. The memory 308 may contain additional instructions as well, including instructions to transmit data or signal to, receive data or signal from, interact with, and/or control one or more of the components of the device 300.

A method 400 for tracking or finding the object 200 using the tracking device 100, corresponding to the operation of the tracking device 100, will now be described, with reference to figures 2-4, according to an embodiment.

In some embodiments, the method 400 may be accomplished with one or more additional operations not described and/or without one or more of the operations discussed. Additionally, the order in which the operations of method 400 are illustrated in figures 2-5 and described below is not intended to be limiting.

The method 400 comprises an antenna selection step or process 410 of selecting one of the plurality of antennas 104 of the tracking device 100, and a step or process 440 of transmitting, or receiving, one or more signals for tracking the object 200 using the wireless communication circuit 102 and the selected antenna 104.

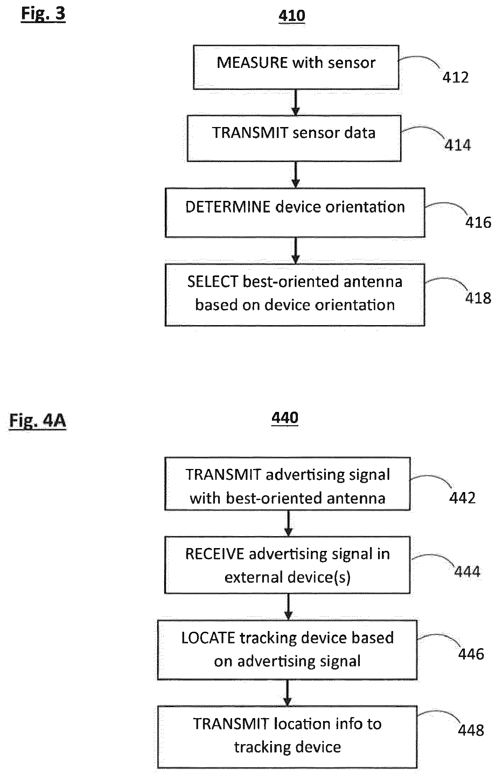

Figure 3 illustrates the antenna selection process 410, according to a first embodiment. It may include the steps 412 to 418 described below.

In the first embodiment, the selection step 410 includes a step 412 of capturing or sensing or measuring data with the orientation sensor 114. For example, the orientation sensor 114 is an accelerometer and measure values of proper acceleration of the tracking device 100, or physical acceleration experienced by the tracking device 100.

The data sensed by the sensor 114, including for example the measured value(s) of proper acceleration, is transmitted to the processor 108 of the tracking device 100, in a step 414.

In a step 416, the processor 108 determines a device orientation information for the device 100 based on the received sensor data. The determined device orientation information is indicative of the best-oriented antenna, among the plurality of antennas 104, for communication with an external device 300, typically an external device 300 in the environment of the tracking device 100.

By definition, the best-oriented antenna is the antenna, among the plurality of antennas 104 of the tracking device 100, that can, or is likely to, transmit to, or receive from, an external device a wireless signal with higher received signal strength value (e.g., higher RSSI (Received Signal Strength Indicator) value) compared to the other antenna(s) from the plurality of antennas 104 of the device 100. The external device may be located anywhere within the wireless or radio coverage range of the tracking device 100, and arranged to communicate according to the same type of wireless communication (e.g., protocol) as the tracking device 100, for example Bluetooth, Bluetooth Low Energy, or any other wireless communication protocol (e.g., any short-range wireless communication protocol).

In a step 418, the processor 108 of the tracking device 100 determines and selects the best-oriented antenna module 104 among the plurality of antennas 104, based on the device orientation information determined in the step 416. A correspondence between the orientation of the tracking device 100 and the best-oriented antenna module may be predetermined. The processor 108 may determine, select, the best-oriented antenna module 104 based on the determined device orientation information and the predetermined correspondence between orientation of the tracking device 100 and the best-oriented antenna module 104.

For example, in the step 418, the processor 108 may use a predetermined mapping table, stored in memory (e.g., in the memory 106), including a mapping, or correspondence, between different values of orientation of the device 100 and, for each value of orientation, the antenna identification information of the antenna 104 considered as the best-oriented antenna for said value of orientation. In other words, in the mapping table, each orientation of the device 100 is mapped to one antenna, among the plurality of antennas 104, considered as the best-oriented antenna for said orientation. Alternatively, the mapping table may include ranges of values of device orientation, instead of specific values of device orientation.

In a variant, in the step 418, the processor 108 may use a trained machine learning model, for example a trained neural network, configured to receive, as input, the device orientation information, determined in the step 416, and to output a best-oriented antenna selected among the plurality of antennas 104. Such a machine learning model may be pre-trained using a training dataset including:
- input training data comprising multiple orientations of the device 100, and
- output training data comprising, for each orientation of the device 100, a best-oriented antenna among the plurality of antennas 104.

In another variant, in the step 418, the processor 108 may determine and select the best-oriented antenna directly based on sensor data from the orientation sensor 114, using a trained machine learning model configured to receive, as input, data from the orientation sensor 114 and to output a best-oriented antenna among the plurality of antennas 104. Such a neural network may be pre-trained using a training dataset including:
- input training data comprising sensor data sensed by the sensor 114 in various orientations of the device 100, and
- output training data comprising, for each input data (i.e., for each orientation of the device 100), a best-oriented antenna among the plurality of antennas 104.

In this variant, the processor 108 does not need to perform the step 416 of determining the orientation of the device 100. The data from the orientation sensor 114 can be directly used as information indicative of the best-oriented antenna.

The step 410 may be periodically performed to update the selected best-oriented antenna. Alternatively, or additionally, the step 410 may be performed upon detection of a predetermined event, for example the event that the tracking device is stopped after being moved. The processor 108 may be configured to detect such an event, based on data from a sensor, for example the orientation sensor or another additional motion sensor.

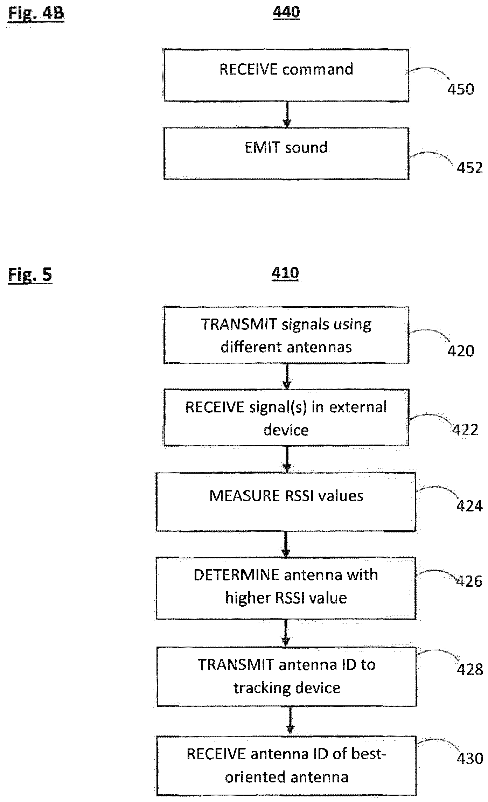

The step 440 of transmitting to, or receiving from, at least one external device 300 one or more signals for tracking the object 200 using the wireless communication circuit 102 and the selected antenna 104 will now be described with reference to figure 4A according to an embodiment and figure 4B according to another embodiment.

The at least one external device 300 may comprise one or more fixed gateways arranged or distributed in an area, for example in a building site. Alternatively, or additionally, the external devices 300 may include a mobile user equipment such as a smartphone.

The at least one external device 300 is configured to wirelessly communicate with the tracking device 100, using the same wireless communication protocol(s) (e.g., Bluetooth, or BLE).

In an embodiment illustrated in figure 4A, the step 440 may include a step 442 of transmitting an advertising signal to one or more external device(s) 300 located within the wireless or radio coverage range of the tracking device 100. In the step 442, the processor 108 transmits the advertising signal using the wireless communication circuit 102 and the best-oriented antenna 104 selected in the step 410. For example, the advertising signal includes advertising packets as defined in BLE standards. The advertising signal may include device identification information of the tracking device 10 (e.g., a device identifier).

In a step 444, the advertising signal from the tracking device 100 may be received by one or more external devices 300 in the environment of the tracking device 100.

In a step 446, the one or more external devices 300 may determine location information of the tracking device 100, based on the received advertising signal(s). For example, the tracking device 100 may be located by performing a method or algorithm of trilateration using the advertising signals received by different external devices 300. If two external devices cooperate to locate the tracking device 100, they may determine a location zone or area where the tracking device 100 is located. If at least three external devices cooperate to locate the tracking device 100, they may determine a point of location of the tracking device 100.

Optionally, in a step 448, the location information of the tracking device 100 may be transmitted by the external device 300 to a user equipment (not represented) by the external device 300 that has determined said location information, through a communication network such as the Internet, or a mobile communication network, to allow a user to find the object 200.

In another embodiment illustrated in figure 4B, the step 440 may include a step 450 of receiving from the external device 300 a wireless or radio command signal for emitting a sound signal. The command signal is received by the tracking device 100 using the wireless communication circuit 102 and the best-oriented antenna 104 selected in the step 410.

In a step 452, the loudspeaker 116 of the tracking device 100 may emit a sound, such as a ringtone, under control of the processor 108, to audibly alert a user of the position of the tracking device 100 which the object 200 is attached to.

The tracking device 100 may be capable of performing the two embodiments above described with reference to figures 4A and 4B.

### Second embodiment

The second embodiment is based on the first embodiment and only differs from the first embodiment by the aspects described below.

In the second embodiment, the tracking device 100 may interact or cooperate with an external device 300 to select the best-oriented antenna among the plurality of antennas 104, instead of self-determining the best-oriented antenna.

The external device 300 may be located within a wireless or radio coverage range of the tracking device 100, for example within the Bluetooth or Bluetooth Low Energy range. It may be for example a gateway or a user equipment, such as a smartphone.

In the second embodiment, the processor 108 of the tracking device 100 may be configured to transmit to an external device a plurality of advertising signals using the wireless communication circuit 102 and the plurality of antennas 104, respectively. Each advertising signal may include identification information of the tracking device 100 (optional) and identification information of the antenna 104 used for transmitting said advertising signal. The processor 108 may be further configured to receive from the external device 300, in response to the advertising signals, an information indicative of the best-oriented antenna 104 including the antenna identification information for the antenna with higher received radio signal strength value (e.g., higher RSSI value) compared to the other antenna(s) 104. The received radio signal strength values are advantageously measured by the external device 300.

In the second embodiment, the tracking device 100 and the external device 300 may be configured to perform the process 410 of selecting the best-oriented antenna of the tracking device 100, illustrated in figure 5 and described below. The best-oriented antenna may be determined by the external device 300, based on one or more signals respectively transmitted by different antennas 104 of the tracking device 100.

In a step 420, the processor 108 of the tracking device 100 transmits to the external device 300 a plurality of wireless or radio signals, for example advertising signals, using the wireless communication circuit 102 and the plurality of antenna modules 104. The processor 108 may successively use the different antenna modules 104 to successively transmit the different signals, each signal including antenna identification information for the antenna used for transmitting said signal (e.g., antenna identifier) and optionally device identification information for the device 100 (e.g., a device identifier). For that purpose, the switching circuit 112 may successively switch between the different antennas 104, under control of the processor 108. The step 420 may be performed periodically.

In a step 422, the processor 306 of the external device 300 may receive one or more of the transmitted signals from the tracking device 100 using the first wireless communication circuit 302 and the antenna 304. It should be noted that the external device 300 may receive only a part of the signals transmitted by the tracking device 100, depending on how the antennas 104 are oriented with respect to the external device 300.

In a step 424, the processor 306 of the external device 300 measures the radio signal strength of the received radio signals from the tracking device 100 and determines a measured value, or measurement value, of radio signal strength, for example a RSSI value, for each radio or wireless signal received by the external device 300 from the tracking device 100.

In a step 426, the processor 306 of the external device 300 compares the received signal strength measurement values (e.g., RSSI values) determined in the step 424, and determines the antenna module, among the plurality of antenna modules 104 of the tracking device 100, with higher received signal strength value (e.g., higher RSSI value) compared to the other antenna(s) 104 of the tracking device 100. The determined antenna module is determined as the best-oriented antenna of the tracking device 100 for wireless communication.

Then, in a step 428, the processor 306 of the external device 300 transmits to the tracking device 100 an information indicative of the best-oriented antenna including the antenna identification information, or antenna identifier, for the antenna determined in the step 426, using the wireless communication circuit 302 and the antenna 304.

In a step 430, the processor 108 of the tracking device 100 receives from the external device 300 said information indicative of the best-oriented antenna including the antenna identification information for the antenna with higher received signal strength measurement value compared to the other antenna(s) from the plurality of antennas 104. In other words, the tracking device 100 is notified of the best oriented antenna module 104 by the external device 300.

Then, the processor 108 selects said best-oriented antenna module 104 (i.e., the antenna module notified by the external device 300) to communicate using the wireless communication circuit 102. In an embodiment, under control of the processor 108, the switching module 112 switches to said best-oriented antenna 104.

In a variant, the external device 300 may be configured to continuously or periodically transmit a signal, such as an advertising signal. The processor 108 of the tracking device 100 may be configured to receive said signal from the external device 300 using the wireless communication circuit 102 and the plurality of antennas 104, respectively. For example, the tracking device 100 may successively switch between its different antenna modules to successively receive the signal from the external device 300 using the different antenna modules 104. Furthermore, the processor 108 may be arranged to measure the received signal strength measurement values (e.g., RSSI values) of the signal received from the external device 300, and determine the antenna with higher received signal strength measurement value (e.g., higher RSSI value) compared to the other antenna(s) 104.

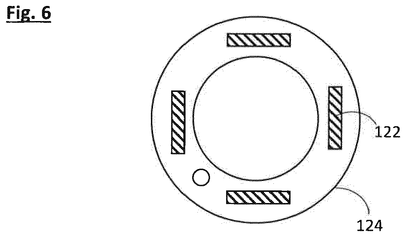

In another embodiment, illustrated in figure 6, the tracking device 100 may comprise one or more additional antennas 122 arranged on a strap 124 for attaching the tracking device 100 and the object 200. The one or more additional antennas 122 may be connected to the wireless communication circuit 102 through conductive tracks (not represented) printed on the strap 124 and a cable (not represented).

In addition, for the method 400 and other processes and methods disclosed herein, the flowchart shows functionality and operation of one possible implementation of present embodiments. In this regard, each block may represent a module, a segment, a portion of a manufacturing or operation process, or a portion of program code, which includes one or more instructions executable by a processor for implementing specific logical functions or steps in the process. The program code may be stored on any type of computer readable medium, for example, such as a storage device including a disk or hard drive. The computer readable medium may include non-transitory computer readable medium, for example, such as computer-readable media that stores data for short periods of time like register memory, processor cache and Random Access Memory (RAM). The computer readable medium may also include non-transitory media, such as secondary or persistent long term storage, like read only memory (ROM), optical or magnetic disks, compact-disc read only memory (CD-ROM), for example. The computer readable media may also be any other volatile or non-volatile storage systems. The computer readable medium may be considered a computer readable storage medium, for example, or a tangible storage device.

The tracking device 100 is implemented with hardware and software. The present disclosure also concerns a computer program comprising instructions which, when the program is executed by a computer, cause the computer to carry out the method 400 previously described.

### FINAL CONSIDERATIONS

Although an overview of the inventive subject matter has been described with reference to specific example embodiments, various modifications and changes may be made to these embodiments without departing from the broader spirit and scope of embodiments of the present invention. For example, various embodiments of features thereof may be mixed and matched or made optional by a person of ordinary skill in the art. Therefore, the Detailed Description is not to be taken in a limiting sense, and the scope of various embodiments is defined only by the appended claims, along with the full range of equivalents to which such claims are entitled.

## Claims

1. A device (100) for tracking an object (200), said device being configured to be attached to said object (200) and including a wireless communication circuit (102), at least two antenna modules (104) having respective positions different from one another, and at least one processor (108) configured to:
- select (410) one of the at least two antenna modules (104) based on information indicative of the best-oriented antenna module among the at least two antenna modules, the best-oriented antenna module being arranged to transmit to, or receive from, an external device (300) wireless signals with higher received signal strength value compared to the other antenna module(s) from the at least two antenna modules (104);
- transmit or receive (440) one or more signals for tracking said object (200) using the wireless communication circuit (102) and the selected best-oriented antenna module (104).

2. The device according to claim 1, further comprising an orientation sensor (114), and the at least one processor (108) is configured to determine said information indicative of the best-oriented antenna module (104) using sensor data from the orientation sensor (114).

3. The device according to any of claims 1 and 2, wherein the at least one processor (108) is configured to:
transmit (420) to an external device (300) at least two signals using the wireless communication circuit (102) and, respectively, the at least two antenna modules (104), each signal including antenna identification information for the antenna module (104) used for transmitting said signal; receive (430) from the external device (300) said information indicative of the best-oriented antenna module including the antenna identification information for the antenna module (104) with higher received signal strength value compared to the other antenna module(s) from the at least two antenna modules (104).

4. The device according to any of claims 1 to 3, wherein, the wireless communication circuit (102) and the at least one processor (108) being mounted on a circuit board (120), the at least two antenna modules (104) are arranged at different positions on at least one face of the circuit board (120).

5. The device according to claim 4, wherein at least one antenna module (104) is positioned on a first face of the circuit board (120) and at least one other antenna module (104) is positioned on a second face of the circuit board (120), opposite to the first face.

6. The device according to claim 4 or 5, wherein the at least two antenna modules (104) are respectively positioned along different sides of the circuit board (120), and/or in different corners of the circuit board (120).

7. The device according to any of claims 1 to 6, further comprising a switching circuit (112), interposed between the wireless communication circuit (102) and the at least two antenna modules (104), configured to switch between the at least two antenna modules (104) under control of the at least one processor (108).

8. The device according to any of claims 1 to 7, further comprising one or more additional antenna modules (122) arranged on a strap (124) for attaching the device (100) and the object (200), wherein said one or more additional antenna modules are connected to the wireless communication circuit through a cable.

9. The device according to any of claims 1 to 8, further comprising a loudspeaker (116) and wherein the received signal for tracking said object includes a command for emitting (452) a sound signal, and the at least one processor (108) is configured to emit the sound signal using the loudspeaker (116) upon reception of said command.

10. A device (300) configured to wirelessly communicate with a tracking device (100) according to any of claims 1 to 9, comprising a wireless communication circuit (302) and at least one processor (306) configured to:
- receive (422) from the tracking device (100) one or more signals from the at least two antenna modules (104) of the tracking device (100), using said wireless communication circuit (302), each received signal including antenna identification information for the antenna module (104) of the tracking device (100) used for transmitting said signal;
- determine (424) received signal strength values for the one or more received signals,
- determine (426) the antenna module (104) of the tracking device with higher received signal strength value compared to the other antenna module(s) from the at least two antenna modules (104) of the tracking device (100);
- transmit (428) to the tracking device (100) an information indicative of the best-oriented antenna module including the antenna identification information for said determined antenna module, using said wireless communication circuit (302).

11. The device according to claim 10, wherein the at least one processor (306) is configured to transmit (450) a command for emitting a sound signal to the tracking device (100), using the wireless communication circuit (302).

12. The device according to any of claims 10 and 11, wherein the at least one processor (306) is configured to receive (444) from the tracking device (100) an advertising signal including a device identification information, using the wireless communication circuit (302), and to determine location information of the tracking device (104) using the received advertising signal.

13. A method for tracking an object (200) attached to a tracking device (100), said tracking device comprising a wireless communication circuit (102), at least two antenna modules (104) having respective positions different from one another, and at least one processor (108), the method comprising the steps, performed by said at least one processor, of:
- selecting (410) one of the at least two antenna modules (104) based on information indicative of the best-oriented antenna module among the at least two antenna modules, the best-oriented antenna module being arranged to transmit to, or receive from, an external device (300) wireless signals with higher received signal strength value compared to the other antenna module(s) from the at least two antenna modules (104);
- transmitting or receiving (440) one or more signals for tracking said object (200) using the wireless communication circuit (102) and the selected best-oriented antenna module (104).

14. The method according to claim 13, further comprising a step (412) of measuring sensor data with an orientation sensor (114) of the tracking device (10), and a step, performed by the at least one processor, of determining (416) said information indicative of the best-oriented antenna module (104) using the sensor data from the orientation sensor (114).

15. The method according to any of claims 13 and 14, further comprising the steps, performed by the at least one processor (108), of:
transmitting (420) to an external device (300) at least two signals using the wireless communication circuit (102) and, respectively, the at least two antenna modules (104), each signal including antenna identification information for the antenna module (104) used for transmitting said signal;
receiving (430) from the external device (300) said information indicative of the best-oriented antenna module including the antenna identification information for the antenna module (104) with higher received signal strength value compared to the other antenna module(s) from the at least two antenna modules (104).
